# EUROPEAN PATENT SPECIFICATION

(11) **EP 3 395 445 B1**
(45) Date of publication and mention of the grant of the patent: **28.04.2021**
(21) Application number: 18168772.4
(22) Date of filing: 23.04.2018
(51) Int. Cl.: B01L 3/00, F16K 99/00

(54) **A CHANNEL AND A CAPILLARY TRIGGER VALVE COMPRISING THE SAME**
EIN KANAL UND EIN KAPILLARVENTIL UMFASSEND DEN ERSTEREN
UN CANAL ET UNE VANNE DE DÉCLENCHEMENT CAPILLAIRE COMPRENANT CELUI-CI

(30) Priority: 24.04.2017 EP 17167791
(43) Date of publication of application: 31.10.2018
(73) Proprietor: miDiagnostics NV, 3001 Leuven (BE)
(72) Inventor: JONES, Benjamin, San Diego, CA 92127 (US)
(74) Representative: AWA Sweden AB

(56) References cited:
- US-A1- 2003 230 489
- US-A1- 2006 102 836

## Description

### Cross-Reference to Related Applications

This application claims priority to European Application No. EP17167791 titled "A CHANNEL AND A CAPILLARY TRIGGER VALVE COMPRISING THE SAME", filed April 24, 2017.

### Background

The present disclosure relates to a channel for a microfluidic system. The disclosure further relates to a capillary trigger valve comprising the channel and a microfluidic circuit comprising the capillary trigger valve.

Microfluidics deals with the behavior, precise control and manipulation of fluids that are geometrically constrained to a small, typically sub-millimeter, scale. Technology based on microfluidics are used for example in inkjet printheads, DNA chips and within lab-on-a-chip technology. In microfluidic applications, fluids are typically moved, mixed, separated or otherwise processed. In some applications, passive fluid control is used. This may be realized by utilizing the capillary forces that arise within sub-millimeter channels. By careful engineering of a so called capillary driven fluid system, such as a microfluidic circuit, it may be possible to perform control and manipulation of fluids.

When designing microfluidic circuits, timing is often of importance. The speed at which the fluid flows in a microfluidic channel will, among other factors, depend on the cross section of the channel. For a channel of constant cross-section of a given length, a smaller cross-section will generally result in a longer time to traverse the length of the channel than a larger cross-sectional dimension. This is because, at least for a circular cross-section channel of dimension D, the driving force behind the capillary flow, the capillary pressure, scales as D1 while the channel resistance scales as D4. Although, the smaller cross-sectional dimension channel will have a higher capillary pressure, the resistance to fluid flow will be much greater. Therefore, for a timing circuit of a given time delay, to maintain a small footprint on a microfluidic chip, it may be advantageous to use channels of small cross-sectional dimensions.

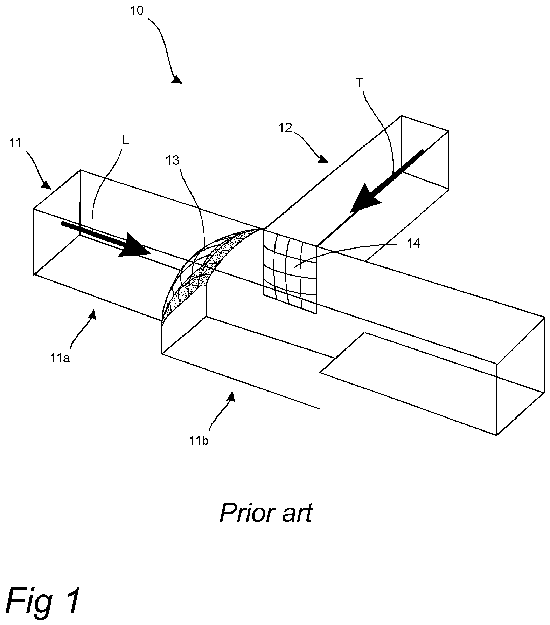

There are many system components that rely on the use of a varying channel cross section, such as for example flow resistors and capillary pumps. Another important group of elements that rely on varying channel cross section are microfluidic valves. To be useful, a microfluidic valve must be able to prevent a liquid from flowing through the valve unless the valve is actively triggered. One kind of such valves known in the art is capillary trigger valves. A specific kind of capillary trigger valves known in the art is shown schematically in a perspective view in Fig. 1. The capillary trigger valve 10 allows for a main fluid entering the valve along a main channel 12 to pass the valve 10 if the valve 10 is triggered by another fluid entering the valve along a trigger channel 11. The main channel 12 mouths into a central portion 11b of the trigger channel 11.

It is essential that the valve geometry is designed such that the main fluid stops flowing before entering the central portion 11b. Thus, depth, or height of the main channel 12 along the direction of flow T of the main fluid is smaller than the depth, or height of the central portion 11b of the trigger conduit 11 along the direction of flow L of the trigger fluid. This is often realized by allowing the trigger channel to have an extended depth at the central portion 11b. The reason for such an arrangement instead of allowing the entire channel 11 to have the extended depth, is that it may be advantageous to have a high resistance for channel 11a (thus, a channel with smaller depth than channel 11b). For instance, it may be desirable for the flow rate in channel 11 to be low compared to the flow rate in channel 12 as this helps to avoid too much dilution of the fluid in channel 12. Furthermore, the angle (often around 90 degrees) between the main channel 12 and the trigger channel 11 allows for the main fluid to experience a significantly larger increase in effective cross section at the transition between the main channel 12 and the trigger channel 11. In other words, there is an abrupt increase of the channel dimensions at a position within the valve 10. The abrupt increase in the cross section makes it energetically unfavorable for the main liquid to flow from the main conduit 12 having a smaller cross section into the central portion 11b of the trigger channel 11. Thus, the main fluid will stop flowing when its air-liquid interface 14 reaches the transition between smaller and larger cross section. If a trigger fluid is allowed to enter the valve along the trigger channel 11, the trigger fluid will make contact with the presently stationary main fluid, whereby its air-liquid interface 14 will be broken, thus allowing the main fluid to start moving and pass the transition, eventually leaving the valve 10.

One problem with microfluidic channels known in the art, such as the trigger channel 11 of Fig. 1, is that the trigger fluid may stop flowing at the transition to the central portion 11b. If the channel is a part of a capillary trigger valve, this would mean that the valve is not opened as intended, as a result of the trigger fluid never making contact with the main fluid. The reason for this is the same physical mechanism responsible for stopping the flow of the main fluid at the transition between the main channel 12 and the trigger channel 11: By necessity, the trigger fluid must also make a transition from a portion 11a of the trigger channel 11 having a smaller depth into the central portion 11b having a larger depth. The risk is thus that the trigger fluid stops when its air-liquid interface 13 reaches the transition between the portion 11a and the central portion 11 b (see Fig. 1). This problem may make conventional channels for microfluidic systems in general and conventional capillary trigger valves in particular unreliable and thus less useful for microfluidic circuit design.

Patent application with publication No. US 2003/0230489 A1 presents low-dispersion methodology for designing microfabricated conduction channels for on-chip electrokinetic-based systems.

Patent application with publication No. US 2006/0102836 A1 relates to a liquid switch for controlling a liquid flow, and a microchip and a mass spectrometry system using thereof.

### Summary

Exemplary embodiments provide a channel for a microfluidic system that allows a fluid, driven by capillary forces, to flow within the channel from a portion of the channel having a first depth to a portion of the channel having a second, deeper, depth with a minimized risk of the fluid coming to an unintentional stop at the transition. This is accomplished by providing a transition in the form of a portion of variable depth within the channel. As a trigger fluid flowing within the channel enters the portion of variable depth, the variable depth is designed to prevent an air-liquid interface of the trigger fluid from stopping at the transition.

### Brief Description of the Drawings

The above, as well as additional features and advantages, will be better understood through the following illustrative and non-limiting detailed description of several embodiments described herein, with reference to the appended drawings, where the same reference numerals will be used for similar elements, wherein:
Figure 1 shows a schematic circuit diagram of a capillary trigger valve 10 according to embodiments known in the art.
Figure 2a shows a channel 100 according to example embodiments of the present disclosure.
Figure 2b shows the cross section 130 of the intermediate portion 116 of the channel 100 shown in Fig. 2a.
Figure 2c shows a part of the channel 100 of Fig. 2a and illustrates the air-liquid interfaces of a fluid flowing within the channel 100.
Figure 3 shows a channel 200 according to example embodiments of the present disclosure.
Figure 4 shows a channel 300 according to example embodiments of the present disclosure.
Figure 5 shows a channel 400 according to example embodiments of the present disclosure.
Figure 6 shows a channel 500 according to example embodiments of the present disclosure.
Figure 7 shows a channel 600 according to example embodiments of the present disclosure.
Figure 8 shows simulated capillary pressures for a fluid flowing along a channel according to the prior art (such as the first channel 11 in Fig. 1), the channel 100 (see Fig. 2a), the channel 400 (see Fig. 5) and the channel 500 (see Fig. 6).
Figure 9a shows a capillary trigger valve 700 comprising the channel 100 of Fig. 2a according to example embodiments of the present disclosure. Figure 9b shows a part of the trigger valve 700 of Fig. 8a and illustrates
the air-liquid interfaces of the fluids flowing within the valve 700.

Figure 10 shows a capillary trigger valve 800 similar to the capillary trigger valve 700 but where the channel further comprises a third depth D3.

### Detailed Description

It is an object to provide an improved channel for a microfluidic system that, at least in part, solves the above mentioned problem.

Thus, according to a first aspect, there is provided a channel for a microfluidic system, comprising: a portion of a first depth and a portion of a second, deeper, depth along a direction of flow of the channel; a portion of variable depth located between the portion of a first depth and the portion of a second depth along the direction of flow, wherein, in the portion of variable depth, each cross-section of the channel that is orthogonal to the direction of flow has at least two different depths, being equal to at least the first depth and the second depth, at different portions thereof, thereby allowing for a gradual transition in capillary pressure as a capillary flow in the channel transitions from the portion of a first depth to the portion of a second depth.

A channel for a microfluidic system is thus provided that allows a fluid, driven by capillary forces, to flow within the channel from a portion of the channel having a first depth to a portion of the channel having a second, deeper, depth with a minimized risk of the fluid coming to an unintentional stop at the transition between the portion having the first depth to the portion having the second depth. This is achieved by providing a transition region in the form of a portion of variable depth within the channel, the portion of variable depth bridging the portion having the first depth with the portion having the second depth. As a trigger fluid flowing within the channel enters the portion of variable depth, the variable depth is designed to prevent an air-liquid interface of the trigger fluid from stopping at the transition. Specifically, by providing a portion with variable depth, the channel cross section will have a gradual variation along the direction of flow. The gradual variation of channel cross section will contribute to minimizing transients in the capillary pressure otherwise potentially arising at the transition between the portion having the first depth and the portion having the second depth. In other words, the proposed channel will allow for a gradual transition in capillary pressure as a capillary flow in the channel transitions from the portion of a first depth to the portion of a second depth.

The channel is generally defined by a bottom surface and a first and a second side wall. The bottom surface extends along a longitudinal direction, corresponding to the direction of flow of the channel, and a lateral direction being perpendicular to the longitudinal direction. Each side wall extends, perpendicularly in some embodiments, from the longitudinal side of the bottom surface to an upper longitudinally extending edge of the side wall. The so formed channel has a width, corresponding to a dimension of the bottom surface in the lateral direction, a length, corresponding to the dimension of the bottom surface in the longitudinal direction, and a depth or height, corresponding to a distance, in a perpendicular direction, from the bottom surface to the upper longitudinally extending edges of the side walls. In embodiments described herein, the width of the channel is typically constant, but the depth or height of the channel may vary along the direction of flow of the channel.

The upper longitudinally extending edges of the side walls define a top surface of the channel. The top surface may be open to the surroundings, or it may be covered by a cover or lid. In the latter case, the channel is thus further defined by a ceiling, i.e., the top surface. The depth or height of the channel may thus also be said to be defined by the distance, in a perpendicular direction, from the bottom surface to the top surface or ceiling of the channel.

It is to be understood that the depth may vary along the channel in its direction of flow. There may thus be portions of different depths, or heights, along the direction of flow of the channel. These portions of different depths or heights may be caused by there being a step in the bottom surface from one depth to another depth, i.e., that the bottom surface is arranged at different elevations at different portions thereof. However, additionally, or alternatively, the portions of different depths or heights may be caused by there being a step in the ceiling, i.e., that the covered top surface is arranged at different elevations or heights at different portions thereof.

A portion of variable depth should be construed as a portion along the direction of flow where the depth is non-uniform. The portion of variable depth may thus be seen as a transition portion bridging the portion of the first depth with the portion of the second depth. The portion of variable depth may be realized in different ways and the term should be interpreted broadly. For example, the portion of variable depth may comprise two or more portions of discrete depths combined in any way. One example that will be further discussed herein below is combining two or more portions having two or more discrete depths, wherein the two or more portions extends along the full extension of the portion of variable depth. Thus, the portion of variable depth may have at least two discrete depths arranged such that a cross-section of the channel that is orthogonal to the direction of flow has at least two different depths.

The features related to geometrical properties of the channel are referred to using terms such as essentially perpendicularly and essentially straight etc. These terms should be construed as describing an example embodiment manufactured within fabrication tolerances.

According to some embodiments, in the portion of variable depth, a portion where a cross-section of the channel has the second depth gradually increases for subsequent cross-sections of the channel along the direction of flow.

According to some embodiments, the channel, in the portion of variable depth, comprises a wall which extends essentially perpendicularly from and connects a bottom surface of the channel located at the first depth with a bottom surface of the channel located at the second depth. This may be advantageous as it allows for achieving a portion of variable depth using two or more portions each having discrete depths, thus making the manufacturing easier. Specifically, using silicon deep reactive ion etched channels, manufacturing of gradual slopes (i.e. a continuous increasing depth along the direction of flow) is difficult to achieve in a reliable way.

According to some embodiments, the portion of variable depth, the channel has the second depth along at least one side wall of the channel.

According to some embodiments, the wall is an essentially straight wall forming an oblique angle with a side wall of the channel.

According to some embodiments, in the portion of variable depth, the channel has the second depth along both side walls of the channel.

According to some embodiments, the wall forms oblique angles with respect to both side walls of the channel.

According to some embodiments, an intersection line between the wall and the bottom surface of the channel located at the second depth is curvilinear.

According to some embodiments, the wall comprises a plurality of portions forming an angle with respect to each other.

According to some embodiments, at least two of the plurality of portions form an oblique angle with respect to the direction of flow.

According to some embodiments, the wall comprises a portion which is aligned along the direction of flow and another portion which is perpendicular to the direction of flow.

According to some embodiments, the wall is arranged such that, in the portion of variable depth, a cross-section of the channel does not depend on position along the direction of flow.

One or more from the herein disclosed embodiments may be advantageous as it may allow for the vertical surfaces, including the side walls and wall portions, to be arranged in relation to each other such that an angle between two adjacent surfaces is larger than or equal to 90 degrees. This is generally better for silicon microfabrication as a lithographically defined structure in silicon with sharp corners (< 90 degrees) is difficult to achieve. Typically, manufacturing of sharp corners will result in significant rounding. Furthermore, the degree of rounding may be difficult to control, resulting in poor reproducibility of the structure.

According to a second aspect there is provided a capillary trigger valve for a microfluidic system, comprising: a first channel according to the first aspect; and a second channel which mouths into the first channel at the portion of a second depth, wherein the first channel is arranged to trigger a capillary flow from the second channel into the first channel as a capillary flow in the first channel transitions from the portion of a first depth to the portion of a second depth.

According to a third aspect there is provided a microfluidic circuit comprising the capillary trigger valve according to the second aspect.

According to a fourth aspect there is provided a diagnostic device comprising at least one of a channel according to the first aspect and a capillary trigger valve according to the second aspect.

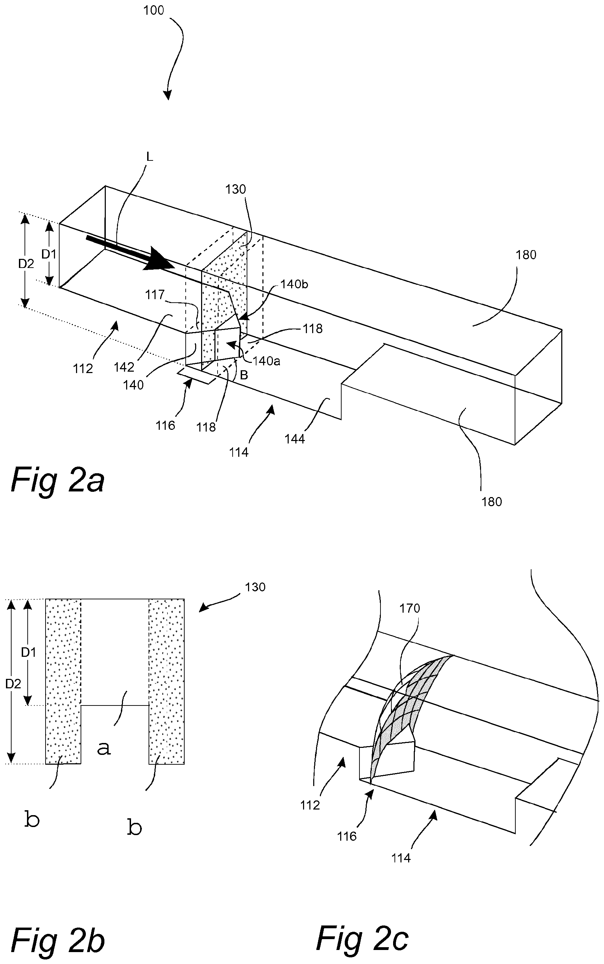

Fig. 2a shows a channel 100 for a microfluidic system according to embodiments of the disclosure. The channel 100 has, along its direction of flow L, a portion 112 of a first depth D1 and a portion 114 of a second, deeper, depth D2. If a fluid is input to the channel 100 from the left hand side in Fig. 2a the fluid will be driven by capillary forces to flow in the direction L along the channel 100.

The channel 100 has a portion 116 of variable depth. The portion of variable depth 116 is located between the portion 112 of the first depth D1 and the portion 114 of the second depth D2 along the direction of flow L. The cross section 130, orthogonal to the direction of flow L, of the channel 100 is shown in Fig. 2b. In the portion 116 of variable depth, each cross-section 130 has two different depths, being equal to the first depth D1 and the second depth D2, at different portions thereof. This is illustrated in Fig. 2b where a first portion A of the cross section 130 has the first depth D1 and a second portion B of the cross section 130 has the second depth D2. The channel 100 further comprises, in the portion 116 of variable depth, a wall 140 which extends essentially perpendicularly from and connects a bottom surface 142 of the channel located at the first depth D1 with a bottom surface 144 of the channel 100 located at the second depth D2. This allows for a gradual transition in capillary pressure as the capillary flow in the channel 100 transitions from the portion 112 of a first depth D1 to the portion 114 of a second depth D2. The gradual transition in capillary pressure effectively prevents the fluid from stopping at the transition between the portion 112 of the first depth D1 and the portion 114 of the second depth D2, as further illustrated in Fig. 2c.

The portion of variable depth 114 of the channel 100 may be designed in many alternative ways. For example, the channel 100 shown in Fig. 2a has a portion of variable depth 114 having a triangular shape. The portion of variable depth 114 thus comprises a triangular shaped portion 117 having the first depth D1 and triangular shaped portions 118 having the second depth D2. In other words, the bottom surface 142 of the portion 112 of the first depth D1 extends into the portion 114 of variable depth in the central parts thereof, whereas a bottom surface 144 of the portion 114 having the second depth D2 extends into the portion 114 of variable depth closer to the side walls 180 of the channel 100. This implies that, in the portion of variable depth 116, the channel 100 has the second depth D2 along both side walls 180 of the channel 100. The wall 140, which in the example embodiment comprises two wall portions 140a,140b, forms oblique angles B with respect to both side walls 180 of the channel 100. The sharp corner at the transition between the portion 112 of the first depth D1 and the portion 114 of the second depth D2 of the triangular shape shown in Fig. 2a-c promotes easier wetting of the side walls 180a, 180b of the channel, thus further minimizing the risk of the air-liquid interface making a stop at the transition.

To improve manufacturability and reproducibility of the structure, the wall portions 140a and 140b may in fact be designed to be interconnected by a rounded corner. In other words, there may be a smooth connection between the wall portions 140a and 140b. Similarly, the connection between the wall 140a and the side wall 180 may be rounded, and the connection between the wall 140b and the side wall 180 may be rounded. It shall be understood that further embodiments described herein may also designed with rounded corners instead of sharp edges between the vertical wall portions of the transition region and between the vertical wall portions of the transition region and side wall.

The channel 100 may be fabricated using a variety of different methods. One possibility is using silicon microfabrication technology. A two-step deep reactive ion etching process may be used. The use of such a process may allow for a convenient way of forming channels of two different depths necessary for creating reliable capillary valve structures. The top surface of the channels of the whole arrangement may either be open or closed with a top cover. This implies that the fluid within the channel may be, at least partly, in gaseous communication with surroundings of the channel such as to allow gas trapped within the fluid to escape from the channel. For example, the top surface may be covered by a gas permeable sheet.

Alternatively, a gas impermeable top cover may be used. In such a case the gas impermeable top cover may be equipped with one or more vents to allow gas to escape. Alternatively, the one or more vents are arranged at another part of a microfluidic circuit of which the channel 100 is a part. The gas permeable sheet forms a top cover that allows gas but not liquid to escape. The open fluidic or gas permeable sheet permits gas to escape as the liquid vapor interface proceeds through the channels without trapping air.

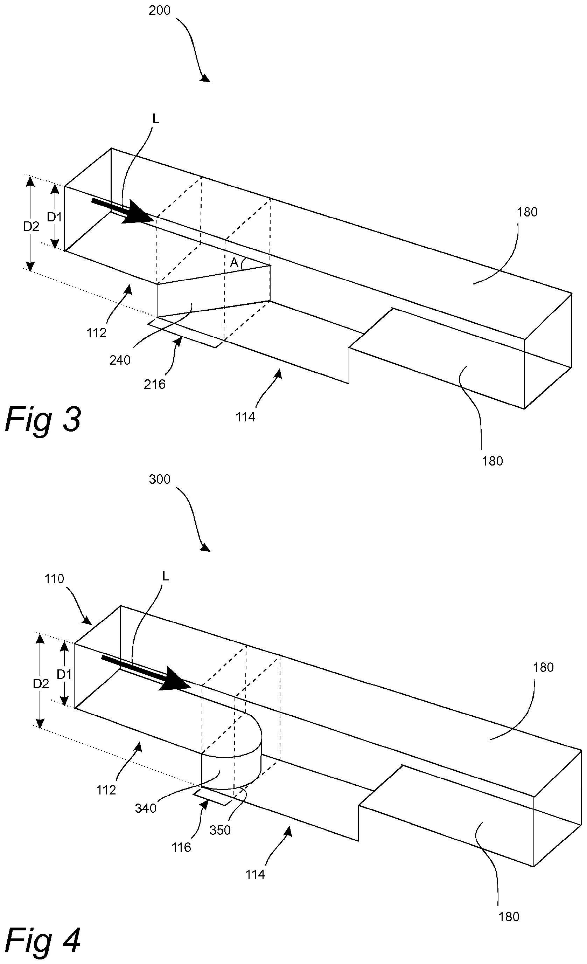

Fig. 3 shows a channel 200 for a microfluidic system according to alternative embodiments of the disclosure. The channel 200 is the same as the channel 100 shown in Fig 2a except that the portion of variable depth 216 comprises an essentially straight wall 240 forming an oblique angle A with a side wall 180 of the channel 200. This implies that the channel 200, in the portion 216 of variable depth, has the second depth D2 along one of the side walls 180 of the channel 200.

Fig. 4 shows a channel 300 for a microfluidic system according to alternative embodiments of the disclosure. The channel 300 is the same as the channel 100 shown in Fig 2a except that the portion of variable depth 316 comprises a curved wall 340 arranged such that an intersection line 350 between the wall 340 and the bottom surface 342 of the channel 300 located at the second depth D2 is curvilinear.

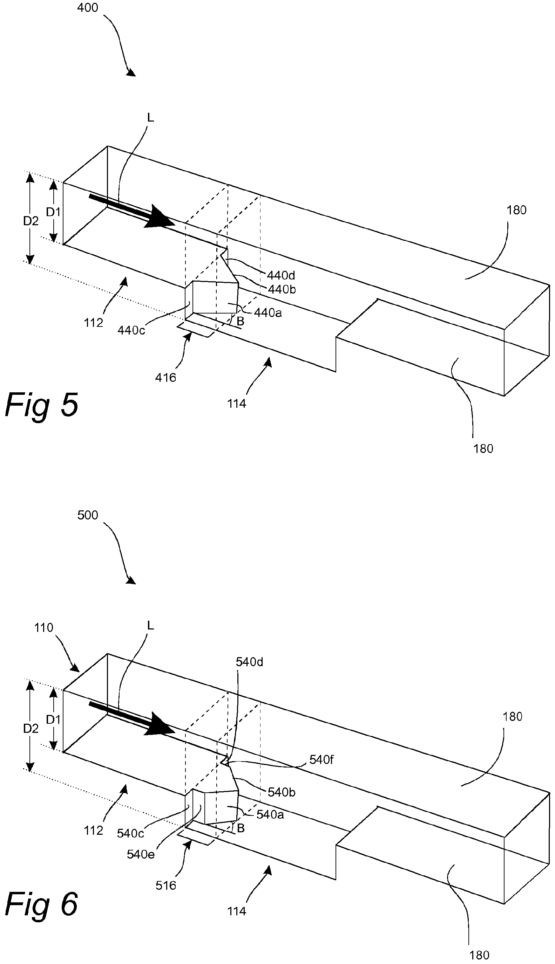

Fig. 5 shows a channel 400 for a microfluidic system according to alternative embodiments of the disclosure. The channel 400 is the same as the channel 100 shown in Fig 2a except that the portion of variable depth 416 comprises a wall 440 having two central wall portions 440a,440b and two peripheral wall portions 440c,440d. The central wall portions 440a,440b each form oblique angles B with respect to the direction of flow L and are arranged in the center of the channel 400. The peripheral wall portions 440c,440d are arranged perpendicular to the direction of flow L such as to connect the side walls 180 of the channel 400 with the central wall portions 440a,440b.

Fig. 6 shows a channel 500 for a microfluidic system according to alternative embodiments of the disclosure. The channel 500 is the same as the channel 400 shown in Fig 5 except that the portion of variable depth 516 comprises a wall 540 having two further wall portions 540e,540f arranged in parallel with the direction of flow L. The further wall portions 540e,540f connects the central wall portions 540a,540b with the peripheral wall portions 540c,540d.

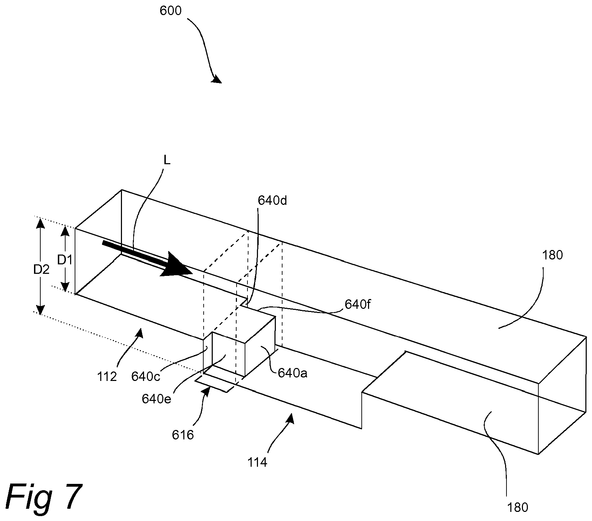

Fig. 7 shows a channel 600 for a microfluidic system according to alternative embodiments of the disclosure. The channel 600 is the same as the channel 500 shown in Fig 6 except that, instead of having two central wall portions 540a,540b, the portion of variable depth 616 instead comprises one central wall portion 640a arranged perpendicular to the direction of flow L. The central wall portion 640a is connected to the side walls 680 of the channel 600 via the further wall portions 640e,640f and the peripheral wall portions 640c,640d. For the channel 600, the wall 640 is arranged such that, in the portion of variable depth 616, a cross-section of the channel 600 does not depend on position along the direction of flow L.

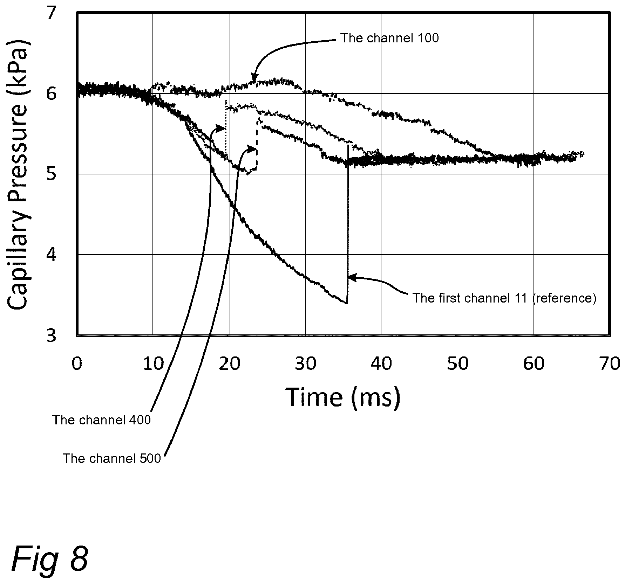

Figure 8 shows simulated capillary pressure as function of time for different geometries of a microfluidic channel. The simulation results have been obtained using the commercial software ANSYS Fluent. Fluent solves the Navier-Stokes equations using a finite volume method. Two-phase flow is accounted for by using a volume-of-fluid approach. Meshes used by the finite volume method typically contained a few hundred-thousand cells. A constant flow rate of 1 mm/s is applied to the inlet of the domain. A contact angle of 45 degrees is used for all wetted walls of the computational domain. The capillary pressure (pressure jump across the liquid-vapor interface) is calculated with each time step. The capillary pressure is shown for four different channels. The simulated capillary pressure obtained using the first channel 11 of Fig. 1 is shown as a reference. Furthermore, the simulated capillary pressure obtained using the channel 100 (Fig. 2a), the channel 400 (Fig. 5) and the channel 500 (Fig. 6) is shown. All curves do, to different degree, show a first phase of decreasing capillary pressure. The initial phase will occur as the fluid has made contact with the transition between the channel of the first depth and the channel of the second depth, the first phase having the longest time duration for the first channel 11 (the reference) and the shortest time duration for the channel 100. After the initial phase of decreasing capillary pressure, the capillary pressure increases abruptly resulting in a transient in the capillary pressure curve. This appearance of the capillary pressure is a result from the air-liquid interface being initially prevented from making the transition from the portion of the first depth to the portion of the second depth at the wall between the two portions. The air-liquid interface continues to advance at the side walls and the upper surface of the channel. Finally, the air-liquid interface has advanced into the portion of the second depth to an extent where it will be energetically favorable for the air-liquid interface to lose its grip to the wall, whereby the air-liquid interface will be free to proceed flowing through the portion of the second depth. At this stage, the capillary pressure curves show a phase of varying capillary pressure corresponding to the fluid adjusting its flow speed to the new channel cross section within the portion of the second depth.

When comparing the capillary pressure from the different simulations, it is apparent that the channel of the prior art (the first channel 11) shows the largest reduction in capillary pressure during the initial phase as well as the largest subsequent transient. Thus, it is clearly seen how the air-liquid interface is effectively prevented from making a smooth and reliable transition between the portion of the first depth and the portion of the second depth.

The channel 100 show a very small pressure decrease and transient change of capillary pressure, whereas the channel 400 and the channel 500 show somewhat larger pressure decrease with subsequent transient pressure change.

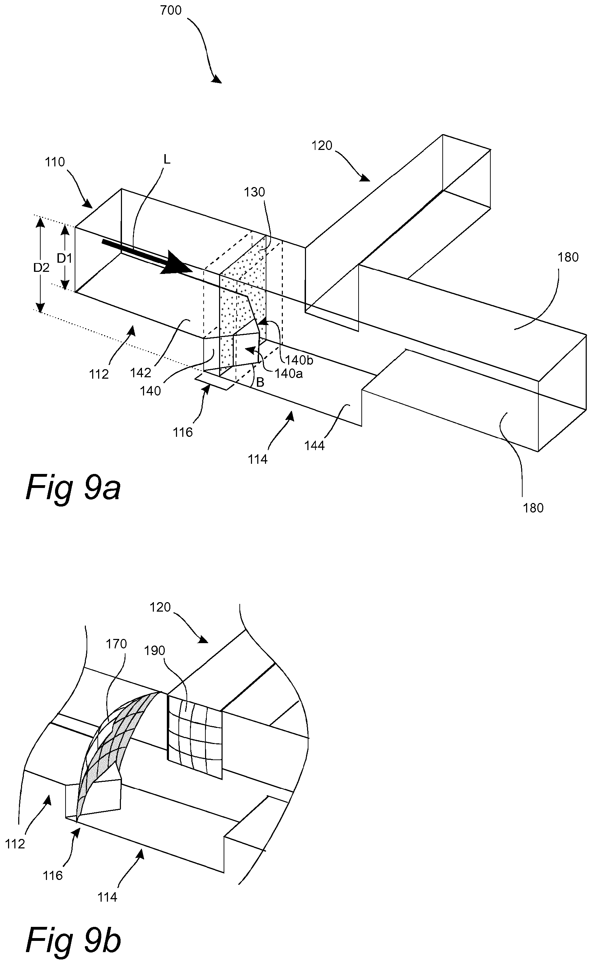

One application of the channel disclosed herein is for capillary trigger valves. Fig. 9a shows a capillary trigger valve 700 for a microfluidic system according to embodiments of the disclosure. The capillary trigger valve 700 comprises a first channel 110, which is similar to the channel 100 shown in Fig. 2a. Although specifically described using the channel 100, a capillary trigger valve of the disclosure may comprise any channel disclosed herein or any other embodiment of the channel within the scope of the claims. Thus, the first channel 110 has along its direction of flow L a portion 112 of a first depth D1 and a portion 114 of a second, deeper, depth D2. The capillary trigger valve 700 further comprises a second channel 120 which mouths into the first channel 110 at the portion 114 of a second depth. The first channel 110 is arranged to trigger a capillary flow from the second channel 120 into the first channel 110 as a capillary flow in the first channel 110 transitions from the portion 112 of a first depth to the portion 114 of a second depth.

A fluid that is to be regulated by the capillary trigger valve 700 is input to the second channel 120 within which it is driven by capillary forces to flow in the direction of the first channel 110. As the fluid reaches the transition between the second channel 120 and the first channel 110, fluid motion will cease as a result from the abrupt increase of an effective cross section that the fluid will experience when arriving at the boundary between the second channel 120 and the portion 114 in which the second channel 120 mouths. The reason for the ceased fluid motion is that the abrupt increase in the effective cross section makes it energetically unfavorable for the fluid to transition from the second channel 120 into the portion 114 of the first channel 110. Put in other words, the increased effective cross section will alter the capillary pressure in the fluid. As long as the first channel is empty, the fluid residing in the second channel will be stationary with its liquid-air interface 190 positioned in the boundary between the second channel 120 and the portion 114 of the first channel 110, as shown in Fig. 9b.

The capillary trigger valve 700 is regulated by allowing a further fluid to enter through the first channel 110. The purpose of the further fluid is to trigger the valve to allow outputting the fluid residing in the second channel 120. The further fluid is driven by capillary forces to flow along the direction of flow L such that it approaches the junction connecting the first channel 110 with the second channel 120. When the further fluid meets the fluid residing in the second channel 120, the liquid-air interface 190 of the fluid is broken by the liquid air interface 170 of the further fluid, hence effectively creating a new liquid air interface providing an increased capillary pressure with respect to the former, stationary liquid-air interface 190, hence sustaining a fluid flow of a mix between the fluid and the further fluid along the direction of flow L, through the portion 114 and leaving the capillary trigger valve through an exit portion 116 of the first channel 110.

The embodiments of the channel and capillary trigger valve disclosed hereinabove require a high contact angle on the top surface. Typically, the contact angle may be approximately > 90 degrees. The contact angle with respect to the other surfaces, such as the side walls and the bottom surface, may be less. For example, the contact angle with respect to the other surfaces may be approximately > 30 degrees. One way to reduce the contact angle in relation to the top surface may be to allow the top surface to be arranged at different elevations or heights at different portions thereof.

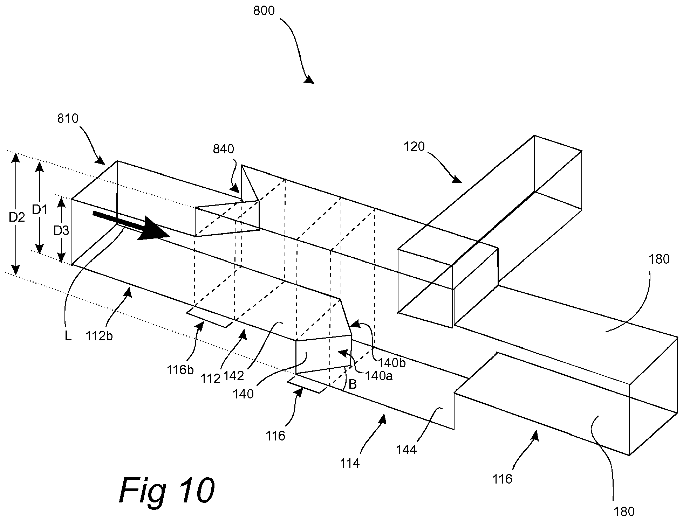

Fig. 10 shows a capillary trigger valve 800 which is similar to the capillary trigger valve 700 except for the shape of the first channel 810. In addition to there being a portion 112 of a first depth D1 and a portion 114 of a second depth D2, the first channel 810 further comprises a portion 112b of a third depth, or height, D3 arranged before the portion 112 of a first depth D1 along the direction of flow L of the first channel 810. As illustrated in the figure, D3 is smaller than D1. Between the portion 112b of a third depth D3 and the portion 112 of a first depth D1 there is a further portion 116b of variable depth. In the further portion 116b of variable depth, each cross-section of the channel 810 that is orthogonal to the direction of flow L has at least two different depths, or heights. The at least two different depths, or heights, are at least equal to the third depth D3 and the first depth D1. In this way, the channel 810 also allows for a gradual transition in capillary pressure as a capillary flow in the channel 810 transitions from the portion 112b of a third depth, or height, D3 to the portion 112 of a first depth D1.

The transition from the portion 112b of a third depth D3 to the portion 112 of the first depth D1 may be defined by a change in elevation, i.e., height, of the top surface of the channel 810, rather than a change in elevation, i.e., depth, of the bottom surface of the channel. Thus, in the further portion 116b of variable depth, the channel 810 comprises a wall 840 which extends essentially perpendicularly from and connects a top surface of the channel located at a first height (at distance D3 from the bottom surface) with a top surface of the channel 810 located at a second height (at distance D1 from the bottom surface). The embodiments described above with respect to the transition from the portion 112 of a first depth D1 to the portion 114 of a second depth D2 applies mutatis mutandis to the transition from the portion of a third depth, or height, D3 to the portion of the first depth, or height, D1. For example, the arrangement and geometry of the wall connecting the top surfaces located at the different heights follows what was said about the arrangement and geometry of the wall connecting the bottom surfaces located at different heights.

The channel 810 of the capillary trigger valve 800 may be manufactured by bonding two silicon wafers together. One wafer has a two-step deep silicon etch and is bonded (using for example fusion bonding, oxide-oxide bonding, or other bonding methods) to a second wafer that has a one-step deep silicon etch.

Although the channel 810 has been specifically described as being a part of the capillary trigger valve 800, the channel 810 of the disclosure may equally well be a part of another microfluidic component in a microfluidic circuit.

The person skilled in the art realizes that the present disclosure by no means is limited to the embodiments described above. On the contrary, many modifications and variations are possible within the scope of the appended claims.

For example, the portion of variable depth may have other geometrical features than those disclosed herein. For example, a combination of curved and planar walls may be used. Furthermore, more than two depths may be used within the portion of variable depth. For example, three depths could be used. The capillary trigger valve may comprise a channel of any one from the disclosed embodiments or any other alternative embodiment within the scope of the claims. A capillary trigger valve may be arranged to have portions of variable depth on either side of the portion of the second depth such as to allow inputting the further fluid along both directions.

Additionally, variations to the disclosed embodiments can be understood and effected by the skilled person from a study of the drawings, the disclosure, and the appended claims.

## Claims

1. A channel (100) for a microfluidic system, comprising:
a portion (112) of a first depth (D1) and a portion (114) of a second, deeper, depth (D2) aligned with the portion of the first depth, wherein the two portions extend along a direction of flow (L) of the channel;
a portion of variable depth located between the portion (112) of a first depth and the portion (114) of a second depth along the direction of flow (L), wherein, in the portion (116) of variable depth, each cross-section of the channel (110) that is orthogonal to the direction of flow (L) has at least two different depths, being equal to at least the first depth (D1) and the second depth (D2), at different portions (a, b) thereof, thereby allowing for a gradual transition in capillary pressure as a capillary flow in the channel (110) transitions from the portion (112) of a first depth (D1) to the portion (114) of a second depth (D2).

2. The channel according to claim 1, wherein, in the portion (116) of variable depth, a portion (b) where a cross-section (130) of the channel (110) has the second depth (D2) gradually increases for subsequent cross-sections of the channel (110) along the direction of flow (L).

3. The channel (100) according to claim 1 or 2, wherein the channel (110), in the portion (116) of variable depth, comprises a wall (140) which extends essentially perpendicularly from and connects a bottom surface (142) of the channel located at the first depth (D1) with a bottom surface (144) of the channel (110) located at the second depth (D2).

4. The channel (100) according to claim 3, wherein, in the portion (116) of variable depth, the channel (110) has the second depth (D2) along at least one side wall of the channel (110).

5. The channel (200) according to claim 4, wherein the wall is an essentially straight wall (240) forming an oblique angle (A) with a side wall (180) of the channel (110).

6. The channel according to claim 3 or 4, wherein, in the portion of variable depth, the channel has the second depth along both side walls of the channel.

7. The channel according to claim 6, wherein the wall forms oblique angles with respect to both side walls of the channel.

8. The channel (300) according to claim 7, wherein an intersection line (350) between the wall (340) and the bottom surface of the channel (110) located at the second depth (D2) is curvilinear.

9. The channel (100,400,500) according to claim 6 or 7, wherein the wall (140) comprises a plurality of portions (140a, 140b, 440a, 440b, 540a, 540b) forming an angle with respect to each other.

10. The channel (100,400,500) according to claim 9, wherein at least two (140a, 140b, 440a, 440b, 540a, 540b) of the plurality of portions form an oblique angle (B) with respect to the direction of flow (L).

11. The channel (600) according to claim 4 or 6, wherein the wall comprises a portion which is aligned along the direction of flow and another portion which is perpendicular to the direction of flow.

12. The channel (600) according to claim 11, wherein the wall is arranged such that, in the portion of variable depth, a cross-section of the channel does not depend on position along the direction of flow.

13. A capillary trigger valve (700) for a microfluidic system, comprising: a first channel (110) according to any one of claims 1-12; and a second channel (120) which mouths into the first channel (110) at the portion (114) of a second depth, wherein the first channel (110) is arranged to trigger a capillary flow from the second channel (120) into the first channel (110) as a capillary flow in the first channel (110) transitions from the portion (112) of a first depth to the portion (114) of a second depth.

14. A microfluidic circuit comprising the capillary trigger valve according to claim 13.

15. A diagnostic device comprising at least one of a channel according to any one of claims 1-12 and a capillary trigger valve according to claim 13.

## Patentansprüche

1. Kanal (100) für ein mikrofluidisches System, umfassend:
einen Abschnitt (112) mit einer ersten Tiefe (D1) und einen Abschnitt (114) mit einer zweiten tieferen Tiefe (D2), der mit dem Abschnitt der ersten Tiefe ausgerichtet ist, wobei die beiden Abschnitte sich entlang einer Flussrichtung (L) des Kanals erstrecken;
wobei ein Abschnitt mit variabler Tiefe sich zwischen dem Abschnitt (112) mit einer ersten Tiefe und dem Abschnitt (114) mit einer zweiten Tiefe entlang der Flussrichtung (L) befindet, wobei in dem Abschnitt (116) mit variabler Tiefe jeder Querschnitt des Kanals (110), der orthogonal zu der Flussrichtung (L) ist, mindestens zwei unterschiedliche Tiefen aufweist, die an verschiedenen Abschnitten (a, b) davon gleich mindestens der ersten Tiefe (D1) und der zweiten Tiefe (D2) sind, wodurch ein allmählicher Übergang des Kapillardrucks ermöglicht wird, wenn ein Kapillarfluss in dem Kanal (110) von dem Abschnitt (112) mit einer ersten Tiefe (D1) in den Abschnitt (114) mit einer zweiten Tiefe (D2) übergeht.

2. Kanal nach Anspruch 1, wobei in dem Abschnitt (116) mit variabler Tiefe ein Abschnitt (b), an dem ein Querschnitt (130) des Kanals (110) die zweite Tiefe (D2) aufweist, allmählich entlang der Flussrichtung (L) auf nachfolgende Querschnitte des Kanals (110) ansteigt.

3. Kanal (100) nach Anspruch 1 oder 2, wobei der Kanal (110) in dem Abschnitt (116) mit variabler Tiefe eine Wand (140) umfasst, die sich im Wesentlichen senkrecht davon erstreckt und eine Bodenfläche (142) des Kanals, die sich auf der ersten Tiefe (D1) befindet, mit einer Bodenfläche (144) des Kanals (110) verbindet, die sich auf der zweiten Tiefe (D2) befindet

4. Kanal (100) nach Anspruch 3, wobei in dem Abschnitt (116) mit variabler Tiefe der Kanal (110) die zweite Tiefe (D2) entlang mindestens einer Seitenwand des Kanals (110) aufweist.

5. Kanal (200) nach Anspruch 4, wobei die Wand eine im Wesentlichen gerade Wand (240) ist, die einen schiefen Winkel (A) mit einer Seitenwand (180) des Kanals (110) bildet.

6. Kanal nach Anspruch 3 oder 4, wobei der Kanal in dem Abschnitt mit variabler Tiefe die zweite Tiefe entlang beiden Seitenwänden des Kanals aufweist.

7. Kanal nach Anspruch 6, wobei die Wand schiefe Winkel in Bezug auf beide Seitenwände des Kanals bildet.

8. Kanal (300) nach Anspruch 7, wobei eine Schnittlinie (350) zwischen der Wand (340) und der Bodenfläche des Kanals (110), die sich auf der zweiten Tiefe (D2) befindet, kurvenförmig ist.

9. Kanal (100, 400, 500) nach Anspruch 6 oder 7, wobei die Wand (140) eine Vielzahl von Abschnitten (140a, 140b, 440a, 440b, 540a, 540b) umfasst, die einen Winkel in Bezug zueinander bilden.

10. Kanal (100, 400, 500) nach Anspruch 9, wobei mindestens zwei (140a, 140b, 440a, 440b, 540a, 540b) der Vielzahl der Abschnitte einen schiefen Winkel (B) in Bezug auf die Flussrichtung (L) bilden.

11. Kanal (600) nach Anspruch 4 oder 6, wobei die Wand einen Abschnitt, der entlang der Flussrichtung ausgerichtet ist, und einen anderen Abschnitt umfasst, der senkrecht zu der Flussrichtung ist.

12. Kanal (600) nach Anspruch 11, wobei die Wand so angeordnet ist, dass in dem Abschnitt mit variabler Tiefe ein Querschnitt des Kanals nicht von der Position entlang der Flussrichtung abhängt.

13. Kapillarventil (700) für ein mikrofluidisches System, umfassend:
einen ersten Kanal (110) nach einem der Ansprüche 1 bis 12; und
einen zweiten Kanal (120), der an dem Abschnitt (114) mit einer zweiten Tiefe in den ersten Kanal (110) mündet, wobei der erste Kanal (110) angeordnet ist, um einen Kapillarfluss aus dem zweiten Kanal (120) in den ersten Kanal (110) auszulösen, wenn der Kapillarfluss in dem ersten Kanal (110) von dem Abschnitt (112) mit einer ersten Tiefe in den Abschnitt (114) mit einer zweiten Tiefe übergeht.

14. Mikrofluidischer Kreislauf, der das Kapillarventil gemäß Anspruch 13 umfasst.

15. Diagnostische Vorrichtung, umfassend mindestens einen von einem Kanal gemäß einem der Ansprüche 1 bis 12 und einem Kapillarventil gemäß Anspruch 13.

## Revendications

1. Canal (100) pour un système microfluidique, comprenant :
une partie (112) d'une première profondeur (D1) et une partie (114) d'une seconde profondeur plus importante (D2) alignée sur la partie de la première profondeur, les deux parties s'étendant le long d'une direction d'écoulement (L) du canal ;
une partie de profondeur variable située entre la partie (112) d'une première profondeur et la partie (114) d'une seconde profondeur le long de la direction d'écoulement (L), dans lequel, dans la partie (116) de profondeur variable, chaque coupe transversale du canal (110) qui est orthogonale à la direction d'écoulement (L) a moins deux profondeurs différentes, étant égales à au moins la première profondeur (D1) et la seconde profondeur (D2), au niveau de différentes parties (a, b) de celle-ci, ce qui permet une transition progressive de pression capillaire à mesure qu'un écoulement capillaire dans le canal (110) passe de la partie (112) d'une première profondeur (D1) à la partie (114) d'une seconde profondeur (D2).

2. Canal selon la revendication 1, dans lequel, dans la partie (116) de profondeur variable, une partie (b) où une coupe transversale (130) du canal (110) a la seconde profondeur (D2) augmente progressivement pour des coupes transversales ultérieures du canal (110) le long de la direction d'écoulement (L).

3. Canal (100) selon la revendication 1 ou 2, le canal (110), dans la partie (116) de profondeur variable, comprenant une paroi (140) qui s'étend essentiellement perpendiculairement depuis une surface inférieure du canal (142) située au niveau de la première profondeur (D1) et raccorde celle-ci avec une surface inférieure (144) du canal (110) située au niveau de la seconde profondeur (D2).

4. Canal (100) selon la revendication 3, dans lequel, dans la partie (116) de profondeur variable, le canal (110) a la seconde profondeur (D2) le long d'au moins une paroi latérale du canal (110).

5. Canal (200) selon la revendication 4, dans lequel la paroi est une paroi essentiellement rectiligne (240) formant un angle oblique (A) avec une paroi latérale (180) du canal (110).

6. Canal selon la revendication 3 ou 4, dans lequel, dans la partie de profondeur variable, le canal a la seconde profondeur le long des deux parois latérales du canal.

7. Canal selon la revendication 6, dans lequel la paroi forme des angles obliques par rapport aux deux parois latérales du canal.

8. Canal (300) selon la revendication 7, dans lequel une ligne d'intersection (350) entre la paroi (340) et la surface inférieure du canal (110) située au niveau de la seconde profondeur (D2) est curviligne.

9. Canal (100, 400, 500) selon la revendication 6 ou 7, dans lequel la paroi (140) comprend une pluralité de parties (140a, 140b, 440a, 440b, 540a, 540b) formant un angle les unes par rapport aux autres.

10. Canal (100, 400, 500) selon la revendication 9, dans lequel au moins deux parties (140a, 140b, 440a, 440b, 540a, 540b) de la pluralité de parties forment un angle oblique (B) par rapport à la direction d'écoulement (L).

11. Canal (600) selon la revendication 4 ou 6, dans lequel la paroi comprend une partie qui est alignée le long de la direction d'écoulement et une autre partie qui est perpendiculaire à la direction d'écoulement.

12. Canal (600) selon la revendication 11, dans lequel la paroi est agencée de sorte que, dans la partie de profondeur variable, une coupe transversale du canal ne dépende pas d'une position le long de la direction d'écoulement.

13. Valve de déclenchement capillaire (700) pour un système microfluidique, comprenant : un premier canal (110) selon l'une quelconque des revendications 1 à 12 ; et un second canal (120) qui débouche dans le premier canal (110) au niveau de la partie (114) d'une seconde profondeur, dans laquelle le premier canal (110) est conçu pour déclencher un écoulement capillaire depuis le second canal (120) dans le premier canal (110) à mesure qu'un écoulement capillaire dans le premier canal (110) passe de la partie (112) d'une première profondeur à la partie (114) d'une seconde profondeur.

14. Circuit microfluidique comprenant la valve de déclenchement capillaire selon la revendication 13.

15. Dispositif de diagnostic comprenant un canal selon l'une quelconque des revendications 1 à 12 ou une valve de déclenchement capillaire selon la revendication 13.
